(19) Europäisches Patentamt / European Patent Office / Office européen des brevets

(11) **EP 4 379 939 A1**

(12) **EUROPEAN PATENT APPLICATION**
published in accordance with Art. 153(4) EPC

(43) Date of publication:
**05.06.2024 Bulletin 2024/23**

(21) Application number: **22849381.3**

(22) Date of filing: **21.07.2022**

(51) International Patent Classification (IPC):
$H01M\ 50/443^{(2021.01)}$    $H01G\ 11/52^{(2013.01)}$
$H01M\ 4/02^{(2006.01)}$    $H01M\ 4/13^{(2010.01)}$
$H01M\ 50/403^{(2021.01)}$    $H01M\ 50/414^{(2021.01)}$
$H01M\ 50/42^{(2021.01)}$    $H01M\ 50/434^{(2021.01)}$
$H01M\ 50/446^{(2021.01)}$    $H01M\ 50/451^{(2021.01)}$
$H01M\ 50/489^{(2021.01)}$

(52) Cooperative Patent Classification (CPC):
H01G 11/52; H01M 4/02; H01M 4/13;
H01M 50/403; H01M 50/414; H01M 50/42;
H01M 50/434; H01M 50/443; H01M 50/446;
H01M 50/451; H01M 50/489; Y02E 60/10

(86) International application number:
**PCT/JP2022/028403**

(87) International publication number:
**WO 2023/008319 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021126182**

(71) Applicant: **Zeon Corporation
Tokyo 100-8246 (JP)**

(72) Inventor: **HARADA, Ayumi
Tokyo 100-8246 (JP)**

(74) Representative: **Maiwald GmbH
Elisenhof
Elisenstraße 3
80335 München (DE)**

(54) **COMPOSITION FOR ELECTROCHEMICAL ELEMENT FUNCTIONAL LAYER, PRODUCTION METHOD FOR SAME, FUNCTIONAL LAYER FOR ELECTROCHEMICAL ELEMENT, AND ELECTROCHEMICAL ELEMENT**

(57) A composition contains a particulate polymer, a binder, and heat-resistant fine particles. The particulate polymer has a volume-average particle diameter, a degree of swelling in electrolyte solution, and a glass-transition temperature that are all within specific ranges and has a particle diameter distribution by number in which a peak or the like is present in each of two specific regions.

EP 4 379 939 A1

**Description**

TECHNICAL FIELD

The present disclosure relates to a composition for an electrochemical device functional layer and method of producing the same, a functional layer for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications.

A lithium ion secondary battery, for example, normally includes battery members such as a positive electrode, a negative electrode, and a separator that isolates the positive electrode and the negative electrode from each other and prevents short-circuiting between the positive and negative electrodes.

In recent years, further improvements to separators have been investigated with the aim of achieving even higher lithium ion secondary battery performance. Specifically, Patent Literature (PTL) 1 to 5, for example, propose using two types of polymers other than a binder component in formation of a functional layer of a lithium ion secondary battery or the like.

CITATION LIST

Patent Literature

PTL 1: JP2017-098203A
PTL 2: WO2018/096975A1
PTL 3: JP2016-100333A
PTL 4: JP2016-100334A
PTL 5: JP2019-133934A

SUMMARY

(Technical Problem)

However, with regards to a functional layer that is formed using a composition for a functional layer or the like having a conventionally known formulation such as described above, there is room for further improvement in terms of inhibiting detachment of constituent components from the functional layer in a dry state (hereinafter, referred to as "dusting resistance"), and there is also room for further improvement in terms of adhesiveness after immersion in electrolyte solution.

Accordingly, one object of the present disclosure is to provide a composition for a functional layer that is capable of forming a functional layer that enables a balance of high levels of dusting resistance and adhesiveness after immersion in electrolyte solution and a method of producing this composition for a functional layer.

Another object of the present disclosure is to provide a functional layer that enables a balance of high levels of dusting resistance and adhesiveness after immersion in electrolyte solution.

Yet another object of the present disclosure is to provide an electrochemical device including a presently disclosed functional layer.

(Solution to Problem)

The inventor conducted diligent studies with the aim of achieving the objects described above. The inventor made a new discovery that it is possible to provide a functional layer that enables a balance of high levels of dusting resistance and adhesiveness after immersion in electrolyte solution by using a composition containing a binder, heat-resistant fine particles, and a particulate polymer that has a volume-average particle diameter, a degree of swelling in electrolyte solution, and a glass-transition temperature that are all within specific ranges and that has a particle diameter distribution by number in which a peak or the like is present in each of two specific regions. In this manner, the inventor completed the present disclosure.

Specifically, the present disclosure aims to advantageously solve the problem set forth above, and [1] a presently disclosed composition for an electrochemical device functional layer comprises a particulate polymer, a binder, and heat-resistant fine particles, wherein the particulate polymer has a volume-average particle diameter of more than 1.0 $\mu$m and not more than 15.0 $\mu$m, the particulate polymer has a degree of swelling in electrolyte solution of not less than a factor of 1 and not more than a factor of 8, a particle diameter distribution by number of the particulate polymer has at least one peak in a particle diameter range of not less than 5.0 $\mu$m and not more than 10.0 $\mu$m and has at least one peak or shoulder in a particle diameter range of not less than 1.0 $\mu$m and not more than 3.0 $\mu$m, and the particulate polymer has a glass-transition temperature of not lower than 20°C and not higher than 100°C. By using a composition containing a binder, heat-resistant fine particles, and a particulate polymer that has a volume-average particle diameter, a degree of swelling in electrolyte solution, and a glass-transition temperature that are all within specific ranges and that has a particle diameter distribution by number in which a peak or the like is present in each of two specific regions in this manner, it is possible to provide a functional layer that enables a balance of high levels of dusting resistance and adhesiveness after immersion in electrolyte solution.

Note that the volume-average particle diameter, degree of swelling in electrolyte solution, and glass-transition temperature of a particulate polymer can be measured by methods described in the EXAMPLES section of the present specification.

Also note that a particle diameter distribution by number of a particulate polymer can be measured by a method described in the EXAMPLES section of the present specification.

[2] In the presently disclosed composition for an electrochemical device functional layer according to the foregoing [1], a proportion constituted by a number of particles having a particle diameter of 3 $\mu$m or less is preferably not less than 20% and not more than 50% of a total number of particles in the particle diameter distribution of the particulate polymer. When the proportion constituted by the number of particles having a particle diameter of 3 $\mu$m or less is not less than 20% and not more than 50% of the total number of particles in the particle diameter distribution of the particulate polymer, adhesiveness of a functional layer after immersion in electrolyte solution and output characteristics of an obtained electrochemical device can be enhanced in a good balance.

[3] In the presently disclosed composition for an electrochemical device functional layer according to the foregoing [1] or [2], the particulate polymer preferably includes an aromatic vinyl monomer unit. When the particulate polymer includes an aromatic vinyl monomer unit, adhesiveness of a functional layer after immersion in electrolyte solution can be even further increased. Note that when a polymer is said to "include a monomer unit" in the present disclosure, this means that "a polymer obtained using that monomer includes a structural unit derived from the monomer".

[4] In the presently disclosed composition for an electrochemical device functional layer according to any one of the foregoing [1] to [3], the particulate polymer preferably includes at least one among a nitrile group-containing monomer unit, an N-methylolamide group-containing monomer unit, and an epoxy group-containing unsaturated monomer unit. When the particulate polymer includes at least one among a nitrile group-containing monomer unit, an N-methylolamide group-containing monomer unit, and an epoxy group-containing unsaturated monomer unit, adhesiveness of a functional layer after immersion in electrolyte solution can be even further increased.

[5] In the presently disclosed composition for an electrochemical device functional layer according to any one of the foregoing [1] to [4], the particulate polymer preferably includes a cross-linkable monomer unit. When the particulate polymer includes a cross-linkable monomer unit, adhesiveness of a functional layer after immersion in electrolyte solution can be even further increased.

[6] In the presently disclosed composition for an electrochemical device functional layer according to any one of the foregoing [1] to [5], the binder preferably includes a (meth)acrylic acid ester monomer unit. When the binder includes a (meth)acrylic acid ester monomer unit, adhesiveness of a functional layer after immersion in electrolyte solution can be even further increased. Note that in the present specification, "(meth)acryl" is used to indicate "acryl" and/or "methacryl".

[7] In the presently disclosed composition for an electrochemical device functional layer according to any one of the foregoing [1] to [6], the binder preferably has a volume-average particle diameter of 0.8 $\mu$m or less. When the volume-average particle diameter of the binder is 0.8 $\mu$m or less, adhesiveness of an obtained functional layer after immersion in electrolyte solution can be even further increased.

[8] The present disclosure aims to advantageously solve the problem set forth above, and a presently disclosed functional layer for an electrochemical device is formed using the composition for an electrochemical functional layer for an electrochemical device according to any one of the foregoing [1] to [7], wherein the functional layer for an electrochemical device has a structure in which the particulate polymer is partially embedded in a heat-resistant adhesive layer containing the heat-resistant fine particles and the binder, the heat-resistant adhesive layer has a thickness L of not less than 2 $\mu$m and not more than 4 $\mu$m, and relationships (1) and (2), shown below,

$$1.0 \le P1/L \le 3.0 \cdots (1)$$

$$0.25 \le P2/L \le 0.8 \cdots (2)$$

are satisfied when, in the particle diameter distribution by number of the particulate polymer, a particle diameter corresponding to a largest peak among the at least one peak in the particle diameter range of not less than 5 $\mu$m and not more than 10 $\mu$m is taken to be P1 and a particle diameter corresponding to a largest peak or shoulder among the at least one peak or shoulder in the particle diameter range of not less than 1 $\mu$m and not more than 3 $\mu$m is taken to be P2.

A functional layer satisfying the structure set forth above has excellent dusting resistance and adhesiveness after immersion in electrolyte solution.

[9] The present disclosure aims to advantageously solve the problem set forth above, and a presently disclosed method of producing a composition for an electrochemical device functional layer that produces the composition for an electrochemical device functional layer according to any one of the foregoing [1] to [7] comprises synthesizing the particulate polymer through: first polymerization of polymerizing a monomer composition containing at least one among an aromatic vinyl monomer and a (meth)acrylonitrile monomer; and second polymerization of adding into a polymerization system and polymerizing one or more monomers selected from an aromatic vinyl monomer, a nitrile group-containing monomer, an N-methylolamide group-containing monomer, and an epoxy group-containing unsaturated monomer at a timing at which a polymerization conversion rate in the first polymerization is not less than 70% and not more than 95%. Through the presently disclosed production method set forth above, it is possible to efficiently produce the presently disclosed composition for an electrochemical device functional layer.

[10] The present disclosure aims to advantageously solve the problem set forth above, and a presently disclosed electrochemical device comprises the functional layer for an electrochemical device according to the foregoing [8]. Through inclusion of the presently disclosed functional layer for an electrochemical device in this manner, it is possible to provide an electrochemical device that can display excellent electrochemical characteristics.

(Advantageous Effect)

According to the present disclosure, it is possible to provide a composition for a functional layer that is capable of forming a functional layer that enables a balance of high levels of dusting resistance and adhesiveness after immersion in electrolyte solution and a method of producing this composition for a functional layer.

Moreover, according to the present disclosure, it is possible to provide a functional layer that enables a balance of high levels of dusting resistance and adhesiveness after immersion in electrolyte solution.

Furthermore, according to the present disclosure, it is possible to provide an electrochemical device including the presently disclosed functional layer.

DETAILED DESCRIPTION

The following provides a detailed description of embodiments of the present disclosure.

The presently disclosed composition for an electrochemical device functional layer (hereinafter, also referred to simply as a "composition for a functional layer") can suitably be used in formation of the presently disclosed functional layer for an electrochemical device (hereinafter, also referred to simply as a "functional layer"). Note that the presently disclosed composition for an electrochemical device functional layer can be efficiently produced according to the presently disclosed method of producing a composition for an electrochemical device functional layer. The presently disclosed functional layer for an electrochemical device is formed using the presently disclosed composition for an electrochemical device functional layer. Moreover, the presently disclosed electrochemical device is an electrochemical device that includes at least the presently disclosed functional layer for an electrochemical device.

(Composition for electrochemical device functional layer)

The presently disclosed composition for an electrochemical device functional layer contains a specific particulate polymer, a binder, and heat-resistant fine particles, and can optionally further contain other components. By using the presently disclosed composition for a functional layer, it is possible to form a functional layer for an electrochemical device having suppressed dusting and excellent adhesiveness after immersion in electrolyte solution.

<Particulate polymer>

The particulate polymer that is contained in the composition for a functional layer is a polymer that has a volume-average particle diameter, a degree of swelling in electrolyte solution, and a glass-transition temperature that are all within specific ranges and that has a particulate form in the composition for a functional layer as described in detail below. It should be noted that the particulate polymer may have a particulate form or may have any other form after members have been adhered to each other via a functional layer formed using the composition for a functional layer.

«Volume-average particle diameter of particulate polymer»

The volume-average particle diameter of the particulate polymer is required to be more than 1.0 $\mu$m and not more than 15.0 $\mu$m, is preferably 3.0 $\mu$m or more, and more preferably 5.0 $\mu$m or more, and is preferably 10.0 $\mu$m or less, and more preferably 8.0 $\mu$m or less. When the volume-average particle diameter of the particulate polymer is not less than any of the lower limits set forth above, adhesiveness of an obtained functional layer after immersion in electrolyte solution can be increased. Moreover, when the volume-average particle diameter of the particulate polymer is not more than any of the upper limits set forth above, it is possible to form a uniform functional layer without detachment of particles from a coating film in a situation in which the composition for a functional layer is applied onto a substrate in formation of a functional layer, and it is also possible to increase adhesiveness of an obtained functional layer. The volume-average particle diameter of the particulate polymer can be adjusted through the type or amount of a metal hydroxide that is used in production of the particulate polymer. This metal hydroxide is described in detail further below.

«Glass-transition temperature of particulate polymer»

The glass-transition temperature (Tg) of the particulate polymer is required to be not lower than 20°C and not higher than 100°C, is preferably 30°C or higher, and more preferably 40°C or higher, and is preferably 70°C or lower, and more preferably 65°C or lower. When the glass-transition temperature of the particulate polymer is not lower than any of the lower limits set forth above, the occurrence of blocking of a functional layer can be inhibited, such as during storage of an electrochemical device including the functional layer, for example. Moreover, when the glass-transition temperature of the particulate polymer is not higher than any of the upper limits set forth above, reduction of adhesiveness of an obtained functional layer can be inhibited. This makes it possible to suppress reduction of a capacity maintenance rate of an obtained electrochemical device after being subjected to vibration. Note that the glass-transition temperature of the particulate polymer can be controlled to a desired value through adjustment of the chemical composition of the particulate polymer.

<<Degree of swelling in electrolyte solution of particulate polymer>>

The degree of swelling in electrolyte solution of the particulate polymer is required to be not less than a factor of 1.0 and not more than a factor of 8.0, is preferably more than a factor of 1.0, more preferably a factor of 1.3 or more, and more preferably a factor of 1.6 or more, and is preferably a factor of 5.0 or less, and more preferably a factor of 3.0 or less. When the degree of swelling in electrolyte solution of the particulate polymer is within any of the ranges set forth above, adhesiveness of a functional layer after immersion in electrolyte solution can be increased. This makes it possible to suppress reduction of a capacity maintenance rate of an obtained electrochemical device after being subjected to vibration. Moreover, when the degree of swelling in electrolyte solution of the particulate polymer is not more than any of the upper limits set forth above, internal resistance of an obtained electrochemical device can be restricted from increasing, and output characteristics of the electrochemical device can be enhanced. Note that the degree of swelling in electrolyte solution of the particulate polymer can be controlled to a desired value through adjustment of the chemical composition of the particulate polymer.

«Particle diameter distribution (by number) of particulate polymer»

A particle diameter distribution by number of the particulate polymer is required to have at least one peak in a particle diameter range of not less than 5.0 $\mu$m and not more than 10.0 $\mu$m and to have at least one peak or shoulder in a particle diameter range of not less than 1.0 $\mu$m and not more than 3.0 $\mu$m. In the following description, the at least one peak in the particle diameter range of not less than 5.0 $\mu$m and not more than 10.0 $\mu$m is also referred to as a "large-diameter peak", and the at least one peak or shoulder in the particle diameter range of not less than 1.0 $\mu$m and not more than 3.0 $\mu$m is also referred to as a "small-diameter peak or the like". The lower limit of the range in which the large-diameter peak is present is preferably 5.5 $\mu$m or more, and the upper limit of this range is preferably 9.0 $\mu$m or less, and more preferably 8.0 $\mu$m or less. When the lower limit of the range in which the large-diameter peak is present is not less than any of the lower limits set forth above, adhesiveness of an adhesive layer can be increased, which makes it possible to suppress reduction of a capacity maintenance rate of an obtained electrochemical device after being subjected to vibration. Moreover, when the upper limit of the range in which the large-diameter peak is present is not more than any of the upper limits set forth above, detachment of the particulate polymer from a functional layer can be inhibited, and dusting of the functional layer can be inhibited. This makes it possible to suppress reduction of adhesiveness through an adhesive layer and to suppress reduction of a capacity maintenance rate of an obtained electrochemical device after being subjected to vibration. In addition, by inhibiting dusting of a functional layer, it is possible to suppress reduction of heat shrinkage resistance of the functional layer. The lower limit of the range in which the small-diameter peak or the like is present is preferably 1.2 $\mu$m or more, and the upper limit of this range is preferably 2.5 $\mu$m or less, and more preferably 2.0 $\mu$m or less. When the lower limit of the range in which the small-diameter peak or the like is present is not less than any of the lower limits set forth above, this makes it possible for small-diameter particles of the particulate polymer to interact well with one another in a functional layer after immersion in electrolyte solution and can increase adhesiveness of the functional layer in electrolyte solution. This also makes it possible to suppress reduction of a capacity maintenance rate of an obtained electrochemical device after being subjected to vibration. Moreover, when the upper limit of the range in which the small-diameter peak or the like is present is not more than any of the upper limits set forth above, this can inhibit small-diameter particles from adopting a film-like form in a functional layer and increasing resistance of the functional layer, and thus can enhance output characteristics of an obtained electrochemical device.

<<Proportion (by number) of particles having particle diameter of 3 $\mu$m or less>>

In the particle diameter distribution by number of the particulate polymer, the proportion constituted by the number of particles having a particle diameter of 3 $\mu$m or less is preferably not less than 20% and not more than 50% of the total number of particles. In particular, the proportion constituted by the number of particles having a particle diameter of 3 $\mu$m or less is preferably 40% or less, and more preferably 30% or less. When the proportion constituted by the number of particles having a particle diameter of 3 $\mu$m or less is within any of the ranges set forth above, adhesiveness of a functional layer after immersion in electrolyte solution can be even further increased. In particular, when the proportion constituted by the number of particles having a particle diameter of 3 $\mu$m or less is not more than any of the upper limits set forth above, it is possible to inhibit small-diameter particles of the particulate polymer from increasing resistance of a functional layer and to enhance output characteristics of an obtained electrochemical device. Moreover, when the proportion constituted by the number of particles having a particle diameter of 3 $\mu$m or less is not more than any of the upper limits set forth above, reduction of adhesiveness of an adhesive layer can be suppressed, and reduction of a capacity maintenance rate of an obtained electrochemical device after being subjected to vibration can be suppressed.

<<Structure of particulate polymer>>

The particulate polymer preferably has a non-uniform structure in which the polymer chemical composition differs between an outer surface side and a central (core) side. In other words, the particulate polymer may have a core-shell structure including a core portion and a shell portion that is formed of a polymer having a different chemical composition from a polymer forming the core portion. The shell portion completely or at least partially covers an outer surface of the core portion. Specifically, in a case in which the particulate polymer has a core-shell structure, a covering format in which the shell portion covers the outer surface of the core portion but does not completely cover the outer surface of the core portion may be adopted.

«Chemical composition of particulate polymer»

No specific limitations are placed on the chemical composition of the particulate polymer so long as the volume-average particle diameter, the degree of swelling in electrolyte solution, and the glass-transition temperature are all within the specific ranges set forth above. For example, the particulate polymer can include an aromatic vinyl monomer unit, a (meth)acrylic acid ester monomer unit, a nitrile group-containing monomer unit, an epoxy group-containing unsaturated monomer unit, a cross-linkable monomer unit, an N-methylolamide group-containing monomer unit, and so forth. In particular, it is preferable that the particulate polymer includes an aromatic vinyl monomer unit, a cross-linkable monomer unit, and at least one among a nitrile group-containing monomer unit, an N-methylolamide group-containing monomer unit, and an epoxy group-containing unsaturated monomer unit.

[Aromatic vinyl monomer unit]

Examples of aromatic vinyl monomers that can form an aromatic vinyl monomer unit include, but are not specifically limited to, styrene, $\alpha$-methylstyrene, styrene sulfonic acid, butoxystyrene, and vinylnaphthalene, of which, styrene is preferable.
Note that one of these aromatic vinyl monomers may be used individually, or two or more of these aromatic vinyl monomers may be used in combination in a freely selected ratio.

The proportional content of aromatic vinyl monomer units in the particulate polymer when all monomer units in the particulate polymer are taken to be 100 mass% is preferably 30 mass% or more, and more preferably 60 mass% or more, and is preferably 95 mass% or less, and more preferably 90 mass% or less. When the proportional content of aromatic vinyl monomer units is not less than any of the lower limits set forth above, elasticity of the particulate polymer improves, and adhesive strength through a functional layer can be increased. On the other hand, when the proportional content of aromatic vinyl monomer units is not more than any of the upper limits set forth above, flexibility of the particulate polymer increases, and film formation properties during drying of the composition for a functional layer improve. Consequently, adhesive strength through a functional layer can be increased.

Note that the "proportional content" of each "monomer unit" referred to in the present disclosure can be measured by a nuclear magnetic resonance (NMR) method such as $^1$H-NMR.

[(Meth)acrylic acid ester monomer unit]

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid ester monomers, n-butyl acrylate, 2-ethylhexyl acrylate, and methyl methacrylate are preferable, and 2-ethylhexyl acrylate is more preferable.

Note that one of these (meth)acrylic acid ester monomers may be used individually, or two or more of these (meth)acrylic acid ester monomers may be used in combination in a freely selected ratio.

The proportional content of (meth)acrylic acid ester monomer units in the particulate polymer when all repeating units of the particulate polymer are taken to be 100 mass% is preferably 10 mass% or more, and is preferably 80 mass% or less, and more preferably 75 mass% or less. When the proportional content of (meth)acrylic acid ester monomer units is not less than the lower limit set forth above, excessive lowering of the glass transition of the particulate polymer can be avoided, and blocking resistance of an obtained functional layer can be improved. On the other hand, when the proportional content of (meth)acrylic acid ester monomer units is not more than any of the upper limits set forth above, adhesive strength through a functional layer can be increased.

[Nitrile group-containing monomer unit]

Examples of nitrile group-containing monomers that can form a nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Note that one of these nitrile group-containing monomers may be used individually, or two or more of these nitrile group-containing monomers may be used in combination in a freely selected ratio.

In a case in which the particulate polymer includes a nitrile group-containing monomer unit, the proportional content of nitrile group-containing monomer units in the particulate polymer when all repeating units in the particulate polymer are taken to be 100 mass% is preferably 3 mass% or more, more preferably 4 mass% or more, and even more preferably 6 mass% or more, and is preferably 30 mass% or less, more preferably 27 mass% or less, and even more preferably 25 mass% or less. When the proportional content of nitrile group-containing monomer units is not less than any of the lower limits set forth above, adhesive strength through an obtained functional layer can be increased. On the other hand, when the proportional content of nitrile group-containing monomer units is not more than any of the upper limits set forth above, flexibility of a particulate polymer can be increased.

[N-methylolamide group-containing monomer unit]

Examples of monomers that can form an N-methylolamide group-containing monomer unit include (meth)acrylamides having a methylol group such as N-methylol(meth)acrylamide. One of these monomers may be used individually, or two or more of these monomers may be used in combination in a freely selected ratio.

In a case in which the particulate polymer includes an N-methylolamide group-containing monomer unit, the proportional content of N-methylolamide group-containing monomer units when the amount of all monomer units of the particulate polymer is taken to be 100 mass% is preferably 0.02 mass% or more, and is preferably 10 mass% or less.

When the proportional content of N-methylolamide group-containing monomer units in the particulate polymer is within the range set forth above, elution of the particulate polymer into electrolyte solution can be sufficiently inhibited.

[Epoxy group-containing unsaturated monomer unit]

Examples of epoxy group-containing unsaturated monomers that can form an epoxy group-containing unsaturated monomer unit include unsaturated glycidyl ethers such as vinyl glycidyl ether, allyl glycidyl ether, butenyl glycidyl ether, o-allylphenyl glycidyl ether, and glycidyl(2-butenyl) ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. Of these epoxy group-containing unsaturated monomers, unsaturated glycidyl ethers and glycidyl esters of unsaturated carboxylic acids are preferable from a viewpoint of even further increasing adhesiveness of a functional layer after immersion in electrolyte solution, and glycidyl methacrylate is more preferable. Note that one of these epoxy group-containing unsaturated monomers may be used individually, or two or more of these epoxy group-containing unsaturated monomers may be used in combination in a freely selected ratio.

In a case in which the particulate polymer includes an epoxy group-containing unsaturated monomer unit, the proportional content of epoxy group-containing unsaturated monomer units when the amount of all monomer units of the particulate polymer is taken to be 100 mass% is preferably 0.5 mass% or more, more preferably 2 mass% or more, and even more preferably 10 mass% or more, and is preferably 30 mass% or less, more preferably 25 mass% or less, and even more preferably 20 mass% or less. When the proportional content of epoxy group-containing unsaturated monomer units in the particulate polymer is not less than any of the lower limits set forth above, adhesiveness of a functional layer after immersion in electrolyte solution can be even further increased. On the other hand, when the proportional content of epoxy group-containing unsaturated monomer units is not more than any of the upper limits set forth above, the particulate polymer can be stably produced.

[Cross-linkable monomer unit]

Examples of monomers that can form a cross-linkable monomer unit include polyfunctional monomers that have two or more groups displaying polymerization reactivity in the monomer. Examples of such polyfunctional monomers include divinyl compounds such as divinylbenzene; di(meth)acrylic acid ester compounds such as diethylene glycol dimethacrylate, ethylene glycol dimethacrylate, diethylene glycol diacrylate, and 1,3-butylene glycol diacrylate; and tri(meth)acrylic acid ester compounds such as trimethylolpropane trimethacrylate and trimethylolpropane triacrylate. Of these monomers, ethylene glycol dimethacrylate is preferable. Note that one of these cross-linkable monomers may be used individually, or two or more of these cross-linkable monomers may be used in combination in a freely selected ratio. Also note that although the previously described epoxy group-containing unsaturated monomer unit and N-methylolamide group-containing monomer unit are monomer units that are cross-linkable, a unit corresponding to an epoxy group-containing unsaturated monomer unit or an N-methylolamide group-containing monomer unit is not considered to be included among cross-linkable monomer units.

The proportional content of cross-linkable monomer units in the particulate polymer when the amount of all monomer units of the particulate polymer is taken to be 100 mass% is preferably 0.02 mass% or more, and is preferably 2 mass% or less, more preferably 1.5 mass% or less, and even more preferably 1 mass% or less. When the proportional content of cross-linkable monomer units in the particulate polymer is within any of the ranges set forth above, elution of the particulate polymer into electrolyte solution can be sufficiently inhibited.

The proportional content of the particulate polymer in the composition for a functional layer is preferably not less than 1 mass% and not more than 12 mass% relative to 100 mass% of the heat-resistant fine particles.

[Production of particulate polymer]

The particulate polymer can be produced through polymerization of a monomer composition that contains the monomers described above, carried out in an aqueous solvent such as water, for example. The proportion constituted by each monomer in the monomer composition is normally the same as the proportion constituted by each monomer unit in the particulate polymer.

The method of polymerization is not specifically limited and may be a suspension polymerization method, an emulsion polymerization and aggregation method, a pulverization method, or the like. In particular, a suspension polymerization method and an emulsion polymerization and aggregation method are preferable, and a suspension polymerization method is more preferable. Moreover, a reaction such as radical polymerization or living radical polymerization can be adopted as the polymerization reaction.

[Other compounding agents]

Other compounding agents such as chain transfer agents, polymerization modifiers, polymerization reaction retardants, reactive fluidizers, fillers, flame retardants, antioxidants, and colorants can be compounded in any amount in the monomer composition that is used in production of the particulate polymer.

The following describes, as one example, a production method in which the particulate polymer is produced by suspension polymerization.

[Production of particulate polymer by suspension polymerization]

(1) Production of monomer composition

First, monomers forming the target particulate polymer and other compounding agents that are added as necessary are mixed to perform production of a monomer composition.

(2) Formation of droplets

Next, the monomer composition is dispersed in water, a polymerization initiator is added, and then droplets of the monomer composition are formed. No specific limitations are placed on the method by which droplets are formed. For example, the droplets can be formed by using a disperser such as an emulsifying/dispersing device to perform shear stirring of the water containing the monomer composition.

The polymerization initiator that is used may be a polymerization initiator such as di(3,5,5-trimethylhexanoyl) peroxide, t-butyl peroxy-2-ethylhexanoate, or azobisisobutyronitrile, for example. Note that the polymerization initiator may be added prior to droplet formation once the monomer composition has been dispersed in water or may be added to the monomer composition prior to the monomer composition being dispersed in water.

From a viewpoint of stabilizing droplets of the monomer composition that are formed in the water, it is preferable that droplets of the monomer composition are formed after adding a dispersion stabilizer to the water. The dispersion stabilizer may be sodium dodecylbenzenesulfonate, a metal hydroxide such as magnesium hydroxide, or the like, for example.

(3) Polymerization

After formation of droplets of the monomer composition, water containing the formed droplets is heated to initiate polymerization, and thereby form a particulate polymer in the water. The reaction temperature of the polymerization is preferably not lower than 50°C and not higher than 95°C. Moreover, the reaction time of the polymerization is preferably not less than 1 hour and not more than 10 hours, and is preferably 8 hours or less, and more preferably 6 hours or less.

In the polymerization, it is preferable that the particulate polymer is obtained through first polymerization of polymerizing a monomer composition containing at least one among an aromatic vinyl monomer and a (meth)acrylonitrile monomer and second polymerization of adding to the polymerization system and polymerizing one or more monomers selected from an aromatic vinyl monomer, a nitrile group-containing monomer, an N-methylolamide group-containing monomer, and an epoxy group-containing unsaturated monomer at a timing at which the polymerization conversion rate in the first polymerization is not less than 70% and not more than 95%. By performing a stepwise polymerization reaction in this manner, it is possible to efficiently produce a particulate polymer having a non-uniform structure.

(4) Washing, filtration, dehydration, and drying

After the polymerization, the particulate polymer can be obtained by performing washing, filtration, and drying of the water containing the particulate polymer by standard methods.

<Binder>

The binder that is contained in the composition for a functional layer is used in order to inhibit components such as the particulate polymer that are contained in a functional formed using the presently disclosed composition for a functional layer from detaching from the functional layer. Although the binder may have a particulate form or may have a non-particulate form, it is preferable that the binder has a particulate form from a viewpoint of good inhibition of detachment of components contained in a functional layer. It should be noted that the binder may have a particulate form or may have any other form after members have been adhered to each other via a functional layer formed using the composition for a functional layer.

The binder may be a known polymer that is water-insoluble and can be dispersed in a dispersion medium such as water without any specific limitations. For example, the binder may be a binding resin such as a thermoplastic elastomer. The thermoplastic elastomer is preferably a conjugated diene polymer or an acrylic polymer, and more preferably an acrylic polymer. Note that one of these binders may be used individually, or two or more of these binders may be used in combination in a freely selected ratio.

The term "acrylic polymer" refers to a polymer that includes a (meth)acrylic acid ester monomer unit. The acrylic polymer that can preferably be used as the binder may be a polymer that includes a (meth)acrylic acid ester monomer unit, an aromatic vinyl monomer unit, a nitrile group-containing monomer unit, and a cross-linkable monomer unit such as previously described and an acid group-containing monomer unit described below, for example, but is not specifically limited thereto.

-Acid group-containing monomer unit-

Examples of acid group-containing monomers that can form an acid group-containing monomer unit include carboxy group-containing monomers, sulfo group-containing monomers, phosphate group-containing monomers, and hydroxy group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" is used to indicate "allyl" and/or "methallyl", and "(meth)acryl" is used to indicate "acryl" and/or "methacryl".

Examples of phosphate group-containing monomers include 2-(meth)acryloyloxy ethyl phosphate, methyl-2-(meth)acryloyloxy ethyl phosphate, and ethyl-(meth)acryloyloxyethyl phosphate.

Note that in the present specification, "(meth)acryloyl" is used to indicate "acryloyl" and/or "methacryloyl".

Examples of hydroxy group-containing monomers include 2-hydroxyethyl acrylate, 2-hydroxypropyl acrylate, 2-hydroxyethyl methacrylate, and 2-hydroxypropyl methacrylate.

Note that one of these acid group-containing monomers may be used individually, or two or more of these acid group-containing monomers may be used in combination in a freely selected ratio.

The proportion constituted by (meth)acrylic acid ester monomer units in the acrylic polymer is preferably 50 mass% or more, more preferably 55 mass% or more, and even more preferably 58 mass% or more, and is preferably 98 mass% or less, more preferably 97 mass% or less, and even more preferably 96 mass% or less. By setting the proportion constituted by (meth)acrylic acid ester monomer units as not less than the lower limit of any of the ranges set forth above, adhesiveness of a functional layer can be increased. Moreover, by setting this proportion as not more than any of the upper limits, electrochemical characteristics of an electrochemical device that includes a functional layer can be further enhanced.

The proportion constituted by cross-linkable monomer units in the acrylic polymer is preferably 0.1 mass% or more, and more preferably 1.0 mass% or more, and is preferably 3.0 mass% or less, and more preferably 2.5 mass% or less. By setting the proportion constituted by cross-linkable monomer units as not less than any of the lower limits set forth above, electrochemical characteristics of an electrochemical device that includes a functional layer can be further enhanced. Moreover, by setting the proportion constituted by cross-linkable monomer units as not more than any of the upper limits set forth above, adhesiveness of a functional layer can be increased.

The proportion constituted by acid group-containing monomer units in the acrylic polymer is preferably 0.1 mass% or more, more preferably 0.3 mass% or more, and even more preferably 0.5 mass% or more, and is preferably 20 mass% or less, more preferably 10 mass% or less, and even more preferably 5 mass% or less. By setting the proportion constituted by acid group-containing monomer units within any of the ranges set forth above, electrochemical characteristics of an obtained electrochemical device can be sufficiently enhanced.

«Glass-transition temperature of binder»

The glass-transition temperature (Tg) of the binder is preferably -100°C or higher, more preferably -90°C or higher, and even more preferably -80°C or higher, and is preferably lower than 30°C, more preferably 20°C or lower, and even more preferably 15°C or lower. When the glass-transition temperature of the binder is not lower than any of the lower limits set forth above, adhesiveness and strength of the binder can be increased. On the other hand, when the glass-transition temperature of the binder is not higher than any of the upper limits set forth above, flexibility of a functional layer can be increased.

«Volume-average particle diameter of binder»

No specific limitations are placed on the volume-average particle diameter of the binder so long as it is smaller than the volume-average particle diameter of the particulate polymer. More specifically, the volume-average particle diameter of the binder is preferably 0.05 $\mu$m or more, and more preferably 0.10 $\mu$m or more, and is preferably 0.8 $\mu$m or less, and more preferably 0.5 $\mu$m or less, for example. When the volume-average particle diameter of the binder is not less than any of the lower limits set forth above, reduction of ion conductivity of a functional layer can be suppressed, and deterioration of output characteristics of an obtained electrochemical device can be suppressed. On the other hand, when the volume-average particle diameter of the binder is not more than any of the upper limits set forth above, it is possible to increase adhesive strength between particles forming a functional layer and between the functional layer and a separator substrate.

<<Content of binder>>

The content of the binder in the composition is preferably 0.1 parts by mass or more, more preferably 0.2 parts by mass or more, and even more preferably 0.5 parts by mass or more per 100 parts by mass of the subsequently described heat-resistant fine particles, and is preferably 20 parts by mass or less, more preferably 15 parts by mass or less, and even more preferably 10 parts by mass or less per 100 parts by mass of the heat-resistant fine particles. When the content of the binder is not less than any of the lower limits set forth above, detachment of components such as the particulate polymer from a functional layer can be inhibited, and dusting resistance can be increased. On the other hand, when the content of the binder is not more than any of the upper limits set forth above, reduction of ion conductivity of a functional layer can be suppressed, and deterioration of output characteristics of an obtained electrochemical device can be suppressed.

The binder can be produced through polymerization of a monomer composition that contains the monomers described above, carried out in an aqueous solvent such as water, for example, but is not specifically limited to being produced in this manner. The proportion constituted by each monomer in the monomer composition is normally the same as the proportion constituted by each monomer unit in the binder.

The polymerization method and the polymerization reaction are not specifically limited and may, for example, be any of the polymerization methods and polymerization reactions that were given as examples for the polymerization method of the previously described particulate polymer.

<Heat-resistant fine particles>

The heat-resistant fine particles that are contained in the composition for a functional layer act to increase heat resistance of a functional layer. Inorganic particles can be used as the heat-resistant fine particles. The material of the inorganic particles is preferably an electrochemically stable material that is stably present in the environment of use of an electrochemical device. Examples of materials that are preferable for the inorganic particles from a viewpoint such as described above include particles of oxides such as aluminum oxide (alumina), hydrous aluminum oxide (boehmite, AlOOH), gibbsite (Al(OH)$_3$), silicon oxide, magnesium oxide (magnesia), magnesium hydroxide, calcium oxide, titanium oxide (titania), barium titanate (BaTiO$_3$), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; fine particles of clay such as talc and montmorillonite; and calcined kaolin. Of these materials, aluminum oxide, boehmite, magnesium hydroxide, barium sulfate, calcined kaolin, and barium titanate are more preferable, and aluminum oxide is even more preferable. This results in the heat-resistant fine particles having a higher specific gravity relative to the particulate polymer and makes it easier for the top of the particulate polymer to protrude from a functional layer obtained through application of the composition for a functional layer, and thus can even further increase adhesiveness of the obtained functional layer. These particles may be subjected to element substitution, surface treatment, solid solution treatment, or the like as necessary. Note that one of these types of heat-resistant fine particles may be used individually, or two or more of these types of heat-resistant fine particles may be used in combination in a freely selected ratio.

<Volume-average particle diameter of heat-resistant fine particles>

The volume-average particle diameter (D50) of the heat-resistant fine particles is preferably 0.1 $\mu$m or more,

more preferably 0.2 $\mu$m or more, and even more preferably 0.25 $\mu$m or more, and is preferably 1.5 $\mu$m or less, more preferably 1.0 $\mu$m or less, and even more preferably 0.8 $\mu$m or less. When the volume-average particle diameter of the heat-resistant fine particles is not less than any of the lower limits set forth above, reduction of ion conductivity in a functional layer can be further suppressed, and output characteristics of an electrochemical device can be improved. Moreover, when the volume-average particle diameter of the heat-resistant fine particles is not more than any of the upper limits set forth above, the capacity of an electrochemical device can be increased because it is possible to cause a functional layer to display excellent heat resistance even in the case of a thin functional layer.

<Mixing ratio of heat-resistant fine particles and particulate polymer>

A mixing ratio of the heat-resistant fine particles and the particulate polymer in the composition for a functional layer, as a mass ratio (heat-resistant fine particles:particulate polymer), is preferably 49:51 to 99: 1, more preferably 58:42 to 94:6, and even more preferably 64:39 to 91:9. When the mixing ratio of the heat-resistant fine particles and the particulate polymer is a mass ratio that is within any of the ranges set forth above, a better balance of heat resistance and adhesiveness of a functional layer is achieved.

<Other components>

The composition for a functional layer may contain any other components besides the components described above. These other components are not specifically limited so long as they do not affect electrochemical reactions in an electrochemical device, and examples thereof include known additives such as dispersants, viscosity modifiers, and wetting agents. One of these other components may be used individually, or two or more of these other components may be used in combination.

<Production method of composition for electrochemical device functional layer>

No specific limitations are placed on the method by which the composition for a functional layer is produced. For example, the composition for a functional layer can be produced by mixing the above-described particulate polymer, binder, heat-resistant fine particles, water as a dispersion medium, and other components that are used as necessary. Note that in a case in which the particulate polymer or binder is produced through polymerization of a monomer composition in an aqueous solvent, the particulate polymer or binder may be mixed with other components while still in the form of a water dispersion. Moreover, in a case in which the particulate polymer or binder is mixed in the form of a water dispersion, water in that water dispersion may be used as the dispersion medium.

Although no specific limitations are placed on the mixing method of the above-described components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

(Functional layer for electrochemical device)

The functional layer for an electrochemical device can be formed on a suitable substrate, for example, using the composition for a functional layer set forth above. The functional layer contains at least the above-described particulate polymer, binder, heat-resistant fine particles, and other components that are used as necessary. Note that components contained in the functional layer are components that were contained in the composition for a functional layer set forth above, and the preferred ratio of these components is also the same as the preferred ratio of the components in the composition for a functional layer.

The method by which the functional layer is formed on the substrate using the composition for a functional layer is not specifically limited and may be, for example:

(1) a method in which the composition for a functional layer is applied onto the surface of the substrate and is then dried;
(2) a method in which the substrate is immersed in the composition for a functional layer and is then dried; or
(3) a method in which the composition for a functional layer is applied onto a releasable substrate and is dried to form a functional layer that is then transferred onto the surface of the substrate.

Note that a functional layer may be formed on just one side of the substrate or functional layers may be formed on both sides of the substrate.

Of these methods, method (1) is preferable because it is easy to control the thickness of the functional layer.

Moreover, method (1) may, for example, include a step of applying the composition for a functional layer onto the substrate (application step) and a step of drying the composition for a functional layer that has been applied onto the substrate to form a functional layer (functional layer formation step).

[Application step]

Examples of methods by which the composition for a functional layer can be applied onto the substrate in the application step include, but are not specifically limited to, doctor blading, reverse roll coating, direct roll coating, gravure coating, extrusion coating, and brush coating.

[Functional layer formation step]

The composition for a functional layer on the substrate may be dried by any commonly known method in the functional layer formation step, without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably 50°C to 150°C, and the drying time is preferably 1 minute to 30 minutes.

The functional layer that is formed on the substrate can suitably be used as a single layer that simultaneously displays both a function as a heat-resistant layer that increases heat resistance of the substrate and a function as an adhesive layer that causes strong adhesion of members to each other.

Moreover, a substrate that includes a functional layer formed using the composition for a functional layer in this manner (hereinafter, also referred to as a "functional layer-equipped substrate") has high producibility since it can be produced through reduced work and time compared to a conventional substrate that includes a heat-resistant layer and an adhesive layer.

In the functional layer that is formed using the composition for a functional layer, a plurality of the heat-resistant fine particles and particles of the binder are typically stacked on one another in a thickness direction of the functional layer. The thickness L of a layer formed through stacking of the heat-resistant fine particles and the binder in the thickness direction of the functional layer (hereinafter, also referred to as a "heat-resistant adhesive layer") is preferably 2 $\mu$m or more, more preferably 2.5 $\mu$m or more, and even more preferably 3 $\mu$m or more, and is preferably 4 $\mu$m or less, and more preferably 3.5 $\mu$m or less. When the thickness L of the heat-resistant adhesive layer is not less than any of the lower limits set forth above, the functional layer has extremely good heat resistance. On the other hand, when the thickness L of the heat-resistant adhesive layer is not more than any of the upper limits set forth above, ion diffusivity of the functional layer can be ensured, and output characteristics of an electrochemical device can be enhanced.

[Ratio of peak (or shoulder) particle diameter of particulate polymer relative to thickness of heat-resistant adhesive layer]

The functional layer is required to have a structure in which the particulate polymer is partially embedded in the heat-resistant adhesive layer, and when in the particle diameter distribution by number of the particulate polymer, a particle diameter corresponding to a largest peak among the at least one peak in the particle diameter range of not less than 5 $\mu$m and not more than 10 $\mu$m is taken to be P1 and a particle diameter corresponding to a largest peak or shoulder among the at least one peak or shoulder in the particle diameter range of not less than 1 $\mu$m and not more than 3 $\mu$m is taken to be P2, these particles diameters P1 and P2 are required to satisfy the following relationships (1) and (2) with the thickness L of the heat-resistant adhesive layer described above.

$$1.0 \le P1/L \le 3.0 \cdots (1)$$

$$0.25 \le P2/L \le 0.8 \cdots (2)$$

Note that in a case in which only one peak is present in the particle diameter range of not less than 5 $\mu$m and not more than 10 $\mu$m, a particle diameter corresponding to that peak is taken to be P1, whereas in a case in which a plurality of peaks of the same size are present, an average value of particle diameters corresponding to these peaks is taken to be P1. Moreover, in a case in which only one peak or shoulder is present in the particle diameter range of not less than 1 $\mu$m and not more than 3 $\mu$m, a particle diameter corresponding to that peak is taken to be P2, whereas in a case in which a plurality of peaks or shoulders of the same size are present, an average value of particle diameters corresponding to these peaks or shoulders is taken to be P2.

In particular, the value of P1/L in relationship (1) is preferably not less than 1.5 and not more than 2.5. When the value of P1/L is not less than any of the lower limits set forth above, reduction of adhesiveness of the functional layer can be suppressed. Moreover, when the value of P1/L is not more than any of the upper limits set forth above, dusting resistance of the functional layer can be even further increased. This also makes it possible to suppress reduction of adhesiveness of the functional layer. Moreover, the value of P2/L in relationship (2) is preferably 0.3 or more, and more preferably 0.4 or more, and is preferably 0.75 or less, and more preferably 0.7 or less. When the value of P2/L is not less than any of the lower limits set forth above, reduction of adhesiveness of the functional layer after immersion in electrolyte solution can be suppressed. This also makes it possible to suppress reduction of a capacity maintenance rate of an obtained electrochemical device after vibration testing. Furthermore, when the value of P2/L is not more than any of the upper limits set forth above, resistance of the functional layer can be restricted from increasing, and output characteristics of an obtained electrochemical device can be enhanced.

(Electrochemical device)

The presently disclosed electrochemical device including a functional layer should include at least the presently disclosed functional layer and thus may include constituent elements other than the presently disclosed functional layer so long as the effects according to the present disclosure are not lost.

Moreover, the presently disclosed electrochemical device may be, but is not specifically limited to, a lithium ion secondary battery or an electric double-layer capacitor, for example, and is preferably a lithium ion secondary battery.

The electrochemical device according to the present disclosure is an electrochemical device that includes the presently disclosed functional layer set forth above. More specifically, the electrochemical device may be an electrochemical device that includes a positive electrode, a negative electrode, a separator (functional layer-equipped separator) having the presently disclosed functional layer formed on a separator substrate, and an electrolyte solution; an electrochemical device that includes a separator substrate, a positive electrode and a negative electrode that include a functional layer, and an electrolyte solution; or an electrochemical device that includes a functional layer-equipped separator and a positive electrode and a negative electrode that optionally include a functional layer. In particular, it is preferable that the electrochemical device includes a functional layer-equipped separator. Note that a functional layer may be formed on just one side of a separator substrate or functional layers may be formed on both sides of a separator substrate in a case in which a functional layer is present on a separator. As a result of the presently disclosed functional layer set forth above having low resistance, an electrochemical device that includes this functional layer has excellent output characteristics.

Moreover, in the electrochemical device, there is strong adhesion between a positive electrode and a separator substrate and/or between a negative electrode and a separator substrate in electrolyte solution through the functional layer. This makes it possible to suppress reduction of a capacity maintenance rate of the electrochemical device after being subjected to vibration.

The following describes a lithium ion secondary battery as one example of the presently disclosed electrochemical device. Note that known positive electrodes, negative electrodes, and electrolyte solutions that are used in lithium ion secondary batteries can be used as the aforementioned positive electrode, negative electrode, and electrolyte solution.

<Positive electrode and negative electrode>

Specifically, an electrode obtained by forming an electrode mixed material layer on a current collector can be used as an electrode (positive electrode or negative electrode). The current collector can be made of a metal material such as iron, copper, aluminum, nickel, stainless steel, titanium, tantalum, gold, or platinum. Of these metal materials, the current collector for a negative electrode is preferably made of copper. The current collector for a positive electrode is preferably made of aluminum. The electrode mixed material layer can be a layer containing an electrode active material and a binder.

<Functional layer-equipped separator>

The functional layer-equipped separator can be produced by, for example, forming a functional layer on a separator substrate using any of the methods of forming a functional layer previously described in the "Functional layer for electrochemical device" section.

The separator substrate may be any of those described in JP2012-204303A, for example, without any specific limitations. Of these separator substrates, a microporous membrane made of polyolefinic resin (polyethylene, polypropylene, polybutene, or polyvinyl chloride) is preferred since such a membrane can reduce the total thickness of the functional layer-equipped separator, which increases the ratio of electrode active material in the lithium ion secondary battery, and consequently increases the volumetric capacity.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCh$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. In particular, $LiPF_6$, $LiClO_4$, and $CF_3SO_3Li$ are preferable because they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as $\gamma$-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Production method of lithium ion secondary battery>

The lithium ion secondary battery that is one example of the presently disclosed electrochemical device can be produced by, for example, stacking the above-described positive electrode and negative electrode with the functional layer-equipped separator in-between, performing rolling, folding, or the like of the resultant laminate, as necessary, to place the laminate in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may be a coin type, a button type, a sheet type, a cylinder type, a prismatic type, a flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified. Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer. In the examples and comparative examples, measurements and evaluations of various attributes were performed as follows.

<Glass-transition temperature>

A particulate polymer and a binder produced in each example or comparative example were each used as a measurement sample. The measurement sample was weighed into an aluminum pan in an amount of 10 mg and was then measured by a differential scanning calorimeter (EXSTAR DSC6220 produced by SII NanoTechnology Inc.) under conditions prescribed in JIS Z 8703 with a measurement temperature range of -100°C to 500°C and a heating rate of 10°C/min, and with an empty aluminum pan as a reference, so as to obtain a differential scanning calorimetry (DSC) curve. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

<Volume-average particle diameter of particulate polymer>

A particulate polymer produced in each example or comparative example was used as a measurement sample.

An amount equivalent to 0.1 g of the measurement sample was weighed out, was taken into a beaker, and then 0.1 mL of alkyl benzenesulfonic acid aqueous solution (DRIWEL produced by FUJIFILM Corporation) was added thereto as a dispersant. In addition, 10 mL to 30 mL of a diluent (ISOTON II produced by Beckman Coulter, Inc.) was added into the beaker, and then a 20 W (Watt) ultrasonic disperser was used to perform 3 minutes of dispersing. Thereafter, a particle size analyzer (Multisizer produced by Beckman Coulter, Inc.) was used to measure a volume-average particle diameter of the measurement sample under conditions of an aperture diameter of 20 $\mu$m, a medium of ISOTON II, and a measured particle count of 100,000. The particle diameter (D50) at which cumulative volume calculated from a small diameter end of the distribution reached 50% was taken to be the volume-average particle diameter of the measurement sample.

<Analysis of particle diameter distribution (by number) of particulate polymer>

A particle diameter distribution by number of a particulate polymer was acquired according to the same method as the method described above in the "Volume-average particle diameter of particulate polymer" section. In the obtained particle diameter distribution, peak detection was performed for a particle diameter range of not less than 5.0 $\mu$m and not more than 10.0 $\mu$m. Moreover, peak or shoulder detection was performed for a particle diameter range of not less than 1.0 $\mu$m and not more than 3.0 $\mu$m. Note that a peak or shoulder was detected through a point of change of the gradient (value obtained through differentiation of frequency on the vertical axis by particle diameter on the horizontal axis) of a particle size distribution curve. Specifically, a "peak" was taken to be a point at which the gradient of the particle size distribution curve was zero when changing from a positive value to a negative value via zero, whereas a "shoulder" was taken to be a point at which the gradient of the particle size distribution curve changed without a change of sign. In addition, the position of a peak detected in the particle diameter range of not less than 5.0 $\mu$m and not more than 10.0 $\mu$m and the position of a peak or shoulder in the particle diameter range of not less than 1.0 $\mu$m and not more than 3.0 $\mu$m were acquired. Note that in all of the examples, one peak was detected in the particle diameter range of not less than 5.0 $\mu$m and not more than 10.0 $\mu$m, and one shoulder was detected in the particle diameter range of not less than 1.0 $\mu$m and not more than 3.0 $\mu$m.

<Volume-average particle diameter of binder>

The volume-average particle diameter of a binder produced in each example was measured by laser diffraction. Specifically, a water dispersion (adjusted to solid content concentration of 0.1 mass%) containing a produced binder was used as a sample. Moreover, in a particle diameter distribution (by volume) measured using a laser diffraction particle size analyzer (LS-230 produced by Beckman Coulter, Inc.), the particle diameter D50 at which cumulative volume calculated from a small diameter end of the distribution reached 50% was taken to be the volume-average particle diameter.

<Degree of swelling in electrolyte solution of particulate polymer>

A water dispersion containing a particulate polymer produced in each example or comparative example was loaded into a petri dish made of polytetrafluoroethylene and was dried under conditions of 48 hours at 25°C to produce a powder. Approximately 0.2 g of the obtained powder was pressed at 200°C and 5 MPa for 2 minutes to obtain a film. The obtained film was cut to 1 cm-square to obtain a test specimen. The mass WO of this test specimen was measured.
The aforementioned test specimen was then immersed in electrolyte solution at 60°C for 72 hours. Thereafter, the test specimen was removed from the electrolyte solution, electrolyte solution on the surface of the test specimen was wiped off, and the mass W1 of the test specimen after immersion testing was measured.
The measured masses WO and W1 were used to calculate the degree of swelling in electrolyte solution S ($\times$) by S = W1/WO.
Note that a solution obtained by dissolving $LiPF_6$ as a supporting electrolyte with a concentration of 1 mol/L in a mixed solvent of ethylene carbonate (EC), diethyl carbonate (DEC), and vinylene carbonate (VC) (volume ratio: EC/DEC/VC = 68.5/30/1.5) was used as the electrolyte solution.

<Thickness of heat-resistant adhesive layer>

A cross-section of a functional layer-equipped separator was observed using a field emission scanning electron microscope (FE-SEM), and the thickness of a heat-resistant adhesive layer was calculated from an obtained image. Note that the thickness of the heat-resistant adhesive layer was taken to be the distance in a perpendicular direction from a surface of the separator at a side where the functional layer was formed to a heat-resistant fine particle forming a surface of the functional layer.

<Adhesiveness after immersion in electrolyte solution (wet adhesiveness)>

A positive electrode and a separator (including functional layers at both sides) produced in each example or comparative example were each cut to 50 mm in length and 10 mm in width. The cut positive electrode and separator were then overlapped and stacked. The resultant laminate was pressed at a pressing rate of 30 m/min by roll pressing with a temperature of 25°C and a load of 10 kN/m to obtain a test specimen. The test specimen was immersed in electrolyte solution having a temperature of 60°C for 72 hours. Note that a solution containing $LiPF_6$ as a supporting electrolyte with a concentration of 1 M in a mixed solvent of ethylene carbonate (EC) and diethyl carbonate (DEC) (volume mixing ratio: EC/DEC = 112) was used as the electrolyte solution. After this immersion, the test specimen was removed from the electrolyte solution, and electrolyte solution on the surface of the test specimen was wiped off. This test specimen was pressed once again under conditions of 3 minutes at 1 MPa and 80°C. The re-pressed test specimen was placed with a surface at the current collector-side of the positive electrode facing downward, and cellophane tape (tape prescribed by JIS Z1522) was affixed to the surface of the positive electrode. Note that the cellophane tape was fixed to a horizontal test stage in advance. The stress when the separator was peeled off by pulling one end of the separator vertically upward at a pulling speed of 50 mm/min was measured. This measurement was made a total of 3 times. Separately thereto, a laminate of a negative electrode and a separator was obtained and this laminate was pressed to obtain a test specimen in the same manner as described above. Moreover, a re-pressed test specimen was obtained and measurement of stress after immersion in electrolyte solution was performed a total of 3 times in the same manner as when the positive electrode was used.

An average value of the total of 6 stress measurements made using the positive electrode and the negative electrode was determined as a second peel strength (N/m) and was evaluated by the following standard as adhesiveness of an electrode and a separator via a functional layer after immersion in electrolyte solution. A larger second peel strength indicates better wet adhesiveness.

A: Second peel strength of 3.0 N/m or more
B: Second peel strength of not less than 1.0 N/m and less than 3.0 N/m
C: Second peel strength of less than 1.0 N/m

<Dusting resistance of functional layer>

A functional layer-equipped separator produced in each example or comparative example was cut out as 5 cm × 5 cm, and the mass (a) of the obtained functional layer-equipped separator piece was measured. Next, the functional layer-equipped separator piece was loaded into a 500 mL glass bottle and was subjected to 3 hours of shaking at a rotation speed of 300 rpm using a shaking machine. The mass (b) of the functional layer-equipped separator piece after shaking was measured, and the dusting rate was calculated according to the following formula (II).

$$\text{Dusting rate (mass\%)} = [(a - b)/a] \times 100 \cdots (II)$$

The dusting resistance of the functional layer was evaluated by the following standard. A smaller value for the dusting rate indicates that constituent components of the functional layer such as a particulate polymer do not detach from the functional layer and that the functional layer has better dusting resistance.

A: Dusting rate of less than 1 mass%
B: Dusting rate of not less than 1 mass% and less than 3 mass%
C: Dusting rate of 3 mass% or more

<Capacity maintenance rate after vibration testing>

A lithium ion secondary battery obtained in each example or comparative example was subjected to charge/discharge testing in which 5 cycles of charging to 4.2 V by a constant-current method with a charge rate of 0.1C and discharging to 3.0 V with a discharge rate of 0.1C were performed at 60°C, and the discharge capacity of the 5th cycle was taken to be the initial capacity. Next, this lithium ion secondary battery was fixed to a sieve having an internal diameter of 200 mm and was subjected to 1 hour of vibration using a RO-TAP Sieve Shaker. Thereafter, charge/discharge testing was performed in the same manner as described above, and the discharge capacity after vibration testing was measured. The discharge capacity after vibration testing as a proportion relative to the initial discharge capacity was determined as a capacity maintenance rate. A larger value indicates less reduction of capacity due to vibration testing.

A: Capacity maintenance rate of 95% or more
B: Capacity maintenance rate of not less than 80% and less than 95%
C: Capacity maintenance rate of less than 80%

<Cycle characteristics of secondary battery>

A lithium ion secondary battery produced in each example or comparative example was left at rest at a temperature of 25°C for 5 hours. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 3.00 V by a 0.2C constant-current method at a temperature of 25°C. Thereafter, the lithium ion secondary battery was subjected to CC-CV charging by a 0.2C constant-current method (upper limit cell voltage: 4.20 V) and CC discharging to 3.00 V by a 0.2C constant-current method. This charging and discharging at 0.2C was repeated three times.

Thereafter, the lithium ion secondary battery was subjected to 100 cycles of a charge/discharge operation with a cell voltage of 4.20 V to 3.00 V and a charge/discharge rate of 1.0C in an environment having a temperature of 25°C. In this cycling, the discharge capacity of the 1st cycle was defined as X1, and the discharge capacity of the 100th cycle was defined as X2.

The discharge capacity X1 and the discharge capacity X2 were used to determine a capacity maintenance rate $\Delta C'$ (= (X2/X1) $\times$ 100(%)) that was evaluated by the following standard. A larger value for the capacity maintenance rate $\Delta C'$ indicates that the secondary battery has better cycle characteristics.

A: Capacity maintenance rate $\Delta C'$ of 90% or more
B: Capacity maintenance rate $\Delta C'$ of not less than 85% and less than 90%
C: Capacity maintenance rate $\Delta C'$ of less than 85%

<Output characteristics of secondary battery>

A lithium ion secondary battery produced in each example or comparative example was constant-current constant-voltage (CCCV) charged to 4.3 V in an atmosphere having a temperature of 25°C for cell preparation. The prepared cell was then discharged to 3.0 V by 0.2C and 1.5C constant-current methods, and the electric capacity was determined. Moreover, a discharge capacity maintenance rate expressed by a ratio of the electric capacities [= (electric capacity at 1.5C/electric capacity at 0.2C) $\times$ 100(%)] was determined. This measurement was performed for 5 lithium ion secondary battery cells. An average value of the discharge capacity maintenance rates of the cells was determined and was evaluated by the following standard. A larger average value for the discharge capacity maintenance rate indicates that the secondary battery has better output characteristics.

A: Average value for discharge capacity maintenance rate of 90% or more
B: Average value for discharge capacity maintenance rate of not less than 85% and less than 90%
C: Average value for discharge capacity maintenance rate of less than 85%

(Example 1)

<Production of particulate polymer p1>

[Production of monomer composition (A)]

A monomer composition (A) was produced by mixing 51 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 4 parts of acrylonitrile as a (meth)acrylonitrile monomer.

[Production of monomer composition (B)]

A monomer composition (B) was produced by mixing 14 parts of styrene as an aromatic vinyl monomer and 6 parts of acrylonitrile as a nitrile group-containing monomer.

[Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

[Suspension polymerization]

A particulate polymer (p1) was produced by suspension polymerization. Specifically, the monomer composition (A) obtained as described above was added to the colloidal dispersion liquid (A) containing magnesium hydroxide, was further stirred therewith, and then 2.9 parts of di(3,5,5-trimethylhexanoyl) peroxide (PEROYL® 355 (PEROYL is a registered trademark in Japan, other countries, or both) produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form mixed droplets off the monomer composition (A) in the colloidal dispersion liquid (A) containing magnesium hydroxide.

The magnesium hydroxide-containing colloidal dispersion liquid (A) in which droplets of the monomer composition had been formed was loaded into a reactor, the temperature was raised to 70°C, the monomer composition (B) obtained as described above was added at a timing at which the polymerization conversion rate was not less than 70% and not more than 95%, and then a polymerization reaction was performed for 5 hours to yield a water dispersion containing a particulate polymer.

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer p1.

Note that the particulate polymer p1 had a non-uniform structure in which the polymer chemical composition differed between a central part and an outer surface.

<Production of particulate polymer p2>

[Production of monomer composition (C)]

A monomer composition (C) was produced by mixing 51 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 4 parts of acrylonitrile as a (meth)acrylonitrile monomer.

[Production of monomer composition (D)]

A monomer composition (D) was produced by mixing 14 parts of styrene as an aromatic vinyl monomer and 6 parts of acrylonitrile as a nitrile group-containing monomer.

[Emulsion polymerization]

In a 5 MPa pressure-resistant vessel equipped with a stirrer, the monomer composition (C) obtained as described above was mixed, and then the monomer composition, 1 part of sodium dodecylbenzenesulfonate as an emulsifier, 150 parts of deionized water, and 0.5 parts of potassium persulfate as a polymerization initiator were loaded and were thoroughly stirred. Thereafter, the temperature was raised to 60°C so as to initiate polymerization. The monomer composition (D) obtained as described above was added once the polymerization conversion rate was not less than 70% and not more than 95%, and then polymerization was continued until the polymerization conversion rate reached 96% to yield a water dispersion containing a particulate polymer p2.

Note that the particulate polymer p2 had a non-uniform structure in which the polymer chemical composition differed between a central part and an outer surface.

<Production of particulate polymer P>

A water dispersion containing a particulate polymer P was obtained by thoroughly stirring 80 parts of the particulate polymer p1 and 20 parts of the particulate polymer p2. The volume-average particle diameter, glass-transition temperature, degree of swelling in electrolyte solution, and particle diameter distribution by number of the obtained particulate polymer P were measured. The results are shown in Table 1.

# EP 4 379 939 A1

<Production of water dispersion containing binder (α)>

A reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition (α) was produced in a separate vessel by mixing 50 parts of deionized water, 0.5 parts of sodium dodecylbenzenesulfonate as a dispersion stabilizer, 94 parts of n-butyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition (α) was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder (α) as an acrylic polymer. The obtained particulate binder (α) had a volume-average particle diameter of 0.25 $\mu$m and a glass-transition temperature of -40°C.

<Production of slurry composition>

A pre-mixing slurry was obtained by adding 0.5 parts of polyacrylic acid as a dispersant to 100 parts of alumina (inorganic particles; AKP30 produced by Sumitomo Chemical Co., Ltd.; volume-average particle diameter: 0.3 $\mu$m) as heat-resistant fine particles, further adding 5 parts in terms of solid content of the water dispersion containing the binder (α) and 1.5 parts of carboxymethyl cellulose as a thickener, adjusting the solid content concentration to 55% through addition of deionized water, and performing mixing using a ball mill.

Next, 0.2 parts of sodium dodecylbenzenesulfonate (NEOPELEX G-15 produced by Kao Corporation) as a surfactant was added to 100 parts of the particulate polymer, mixing was performed such that the solid content concentration was 40%, and the resultant mixture was added to the pre-mixing slurry obtained as described above. Moreover, the solid content concentration was adjusted to 40% through addition of deionized water, and both the inorganic particles (alumina) serving as heat-resistant fine particles and the particulate polymer were mixed such that the mixing ratio of the inorganic particles and the particulate polymer was 10 mass% of the particulate polymer relative to 100 mass% of the inorganic particles to yield a slurry composition (composition for a functional layer).

<Production of functional layer-equipped separator>

A microporous membrane made of polyethylene (thickness: 12 $\mu$m) was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator including functional layers at both sides of the separator substrate. Note that the thickness of a heat-resistant adhesive layer in each of these functional layers was 2.0 $\mu$m. Dusting resistance of the obtained functional layer-equipped separator was measured. The result is shown in Table 1.

<Production of positive electrode>

A slurry composition for a positive electrode was produced by mixing 100 parts of $LiCoO_2$ (volume-average particle diameter: 12 $\mu$m) as a positive electrode active material, 2 parts of acetylene black (HS-100 produced by Denka Company Limited) as a conductive material, 2 parts in terms of solid content of polyvinylidene fluoride (#7208 produced by Kureha Corporation) as a binder for a positive electrode mixed material layer, and N-methylpyrrolidone as a solvent, adjusting the total solid content concentration to 70%, and mixing these materials in a planetary mixer.

The slurry composition for a positive electrode was applied onto aluminum foil of 20 $\mu$m in thickness serving as a current collector by a comma coater such as to have a thickness after drying of approximately 150 $\mu$m. The applied slurry composition was dried by conveying the aluminum foil inside a 60°C oven for 2 minutes at a speed of 0.5 m/min. Thereafter, 2 minutes of heat treatment was performed at 120°C to obtain a pre-pressing positive electrode web. The pre-pressing positive electrode web was rolled by roll pressing to obtain a post-pressing positive electrode including a positive electrode mixed material layer (thickness: 60 $\mu$m).

<Production of negative electrode>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. The reaction was quenched by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing the desired binder for a negative electrode mixed material layer.

After compounding 80 parts of artificial graphite (volume-average particle diameter: 15.6 $\mu$m) as a negative electrode active material (1) and 16 parts of a silicon-based active material $SiO_x$ (volume-average particle diameter: 4.9 $\mu$m) as a negative electrode active material (2) and then mixing 2.5 parts in terms of solid content of a 2% aqueous solution of carboxymethyl cellulose sodium salt (MAC350HC produced by Nippon Paper Industries Co., Ltd.) as a viscosity modifier and deionized water therewith so as to adjust the solid content concentration to 68%, these materials were mixed at 25°C for 60 minutes. The solid content concentration was further adjusted to 62% with deionized water, and a further 15 minutes of mixing was performed at 25°C to yield a mixture. Deionized water and 1.5 parts in terms of solid content of the water dispersion containing the binder for a negative electrode mixed material layer described above were added to this mixture, the final solid content concentration was adjusted to 52%, and 10 minutes of mixing was performed to obtain a mixture. This mixture was subjected to defoaming under reduced pressure to yield a slurry composition for a negative electrode having good fluidity.

The slurry composition for a negative electrode was applied onto copper foil of 20 $\mu$m in thickness serving as a current collector by a comma coater such as to have a thickness after drying of approximately 150 $\mu$m. The applied slurry composition was dried by conveying the copper foil inside a 60°C oven for 2 minutes at a speed of 0.5 m/min. Thereafter, 2 minutes of heat treatment was performed at 120°C to obtain a pre-pressing negative electrode web. The pre-pressing negative electrode web was rolled by roll pressing to obtain a post-pressing negative electrode including a negative electrode mixed material layer (thickness: 80 $\mu$m).

The functional layer-equipped separator, positive electrode, and negative electrode obtained as described above were used to evaluate adhesiveness after immersion in electrolyte solution. The result is shown in Table 1.

<Production of lithium ion secondary battery>

The post-pressing positive electrode produced as described above was cut out as a rectangle of 49 cm × 5 cm and was placed with the surface at the positive electrode mixed material layer-side facing upward. The functional layer-equipped separator was cut out as 120 cm × 5.5 cm and was arranged on this positive electrode mixed material layer such that the positive electrode was positioned at one longitudinal direction side of the functional layer-equipped separator. In addition, the post-pressing negative electrode produced as described above was cut out as a rectangle of 50 cm × 5.2 cm and was arranged on the functional layer-equipped separator such that the surface at the negative electrode mixed material layer-side faced toward the functional layer-equipped separator and the negative electrode was positioned at the other longitudinal direction side of the functional layer-equipped separator. The resultant laminate was wound by a winding machine to obtain a roll. This roll was pressed into a flattened form at 70°C and 1 MPa and was subsequently enclosed in an aluminum packing case serving as a battery case. Electrolyte solution (solvent: ethylene carbonate/diethyl carbonate/vinylene carbonate (volume ratio) = 68.5/30/1.5; electrolyte: $LiPF_6$ of 1 M in concentration) was injected such that no air remained. An opening of the aluminum packing case was heat sealed at a temperature of 150°C so as to close the aluminum packing case and produce a wound lithium ion secondary battery having a capacity of 800 mAh.

The obtained lithium ion secondary battery was used to evaluate the capacity maintenance rate after vibration testing, cycle characteristics, and output characteristics of the secondary battery. The results are shown in Table 1.

(Example 2)

Various operations, measurements, and evaluations were performed in the same way as in Example 1 with the exception that the number of parts of the colloidal dispersion liquid containing magnesium hydroxide was increased in "Production of particulate polymer p1" such that the volume-average particle diameter and position of a large-diameter peak for the particulate polymer were as indicated in Table 1. The results are shown in Table 1.

(Example 3)

Various operations, measurements, and evaluations were performed in the same way as in Example 1 with the exception that the number of parts of the colloidal dispersion liquid containing magnesium hydroxide was reduced in "Production of particulate polymer p1" such that the volume-average particle diameter and position of a large-diameter peak for the particulate polymer were as indicated in Table 1. The results are shown in Table 1.

(Example 4)

Various operations, measurements, and evaluations were performed in the same way as in Example 1 with the exception that the number of parts of the emulsifier was increased in "Production of particulate polymer p2" such that the volume-average particle diameter and position of a small-diameter peak for the particulate polymer were as indicated in Table 1. The results are shown in Table 1.

(Example 5)

Various operations, measurements, and evaluations were performed in the same way as in Example 1 with the exception that the number of parts of the emulsifier was reduced in "Production of particulate polymer p2" such that the volume-average particle diameter and position of a small-diameter peak for the particulate polymer were as indicated in Table 1. The results are shown in Table 1.

(Examples 6 and 7)

Various operations, measurements, and evaluations were performed in the same way as in Example 1 with the exception that the chemical compositions of the monomer compositions in "Production of particulate polymer p1" and "Production of particulate polymer p2" were changed such that the chemical composition of the obtained particulate polymer was as indicated in Table 1. The results are shown in Table 1.

(Example 8)

Various operations, measurements, and evaluations were performed in the same way as in Example 1 with the exception that the quantitative ratio of the particulate polymer p1 and the particulate polymer p2 in "Production of particulate polymer P" was changed to 50:50. The results are shown in Table 1.

(Example 9)

Various operations, measurements, and evaluations were performed in the same way as in Example 1 with the exception that particulate polymers p1 and p2 produced as described below were used. The results are shown in Table 1.

<Production of particulate polymer p1>

Various operations were performed in the same way as in Example 1 to obtain a particulate polymer p1 with the exception that a monomer composition (E) produced as described below was used instead of the monomer composition (A), and a monomer composition (F) produced as described below was used instead of the monomer composition (B).

[Production of monomer composition (E)]

The monomer composition (E) was produced by mixing 51 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 4 parts of glycidyl methacrylate as an epoxy group-containing unsaturated monomer.

[Production of monomer composition (F)]

The monomer composition (F) was produced by mixing 14 parts of styrene as an aromatic vinyl monomer and 6 parts of glycidyl methacrylate as an epoxy group-containing unsaturated monomer.

<Production of particulate polymer p2>

Various operations were performed in the same way as in Example 1 to obtain a particulate polymer p2 with the exception that a monomer composition (G) produced as described below was used instead of the monomer composition (C), and a monomer composition (H) produced as described below was used instead of the monomer composition (D).

[Production of monomer composition (G)]

The monomer composition (G) was produced by mixing 51 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 4 parts of glycidyl methacrylate as an epoxy group-containing unsaturated monomer.

[Production of monomer composition (H)]

The monomer composition (H) was produced by mixing 14 parts of styrene as an aromatic vinyl monomer and 6 parts of glycidyl methacrylate as an epoxy group-containing unsaturated monomer.

(Example 10)

Various operations, measurements, and evaluations were performed in the same way as in Example 1 with the exception that the chemical composition of the monomer composition ($\alpha$) was changed as follows to obtain a monomer composition ($\beta$) in "Production of water dispersion containing binder ($\alpha$)". The results are shown in Table 1.
The monomer composition ($\beta$) was produced by mixing 94 parts of 2-ethylhexyl acrylate as a (meth)acrylic acid ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

(Example 11)

Various operations, measurements, and evaluations were performed in the same way as in Example 1 with the exception that particulate polymers p1 and p2 produced as described below were used. The results are shown in Table 1. Note that the particulate polymers p1 and p2 that were produced in this example had a uniform structure in which the polymer chemical composition was substantially the same at a central part and an outer surface.

<Production of particulate polymer p1>

[Production of monomer composition (I)]

A monomer composition (I) was produced by mixing 65 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 10 parts of acrylonitrile as a (meth)acrylonitrile monomer.

[Production of metal hydroxide]

A colloidal dispersion liquid (A) containing magnesium hydroxide as a metal hydroxide was produced by gradually adding an aqueous solution (A2) of 5.6 parts of sodium hydroxide dissolved in 50 parts of deionized water to an aqueous solution (A1) of 8 parts of magnesium chloride dissolved in 200 parts of deionized water under stirring.

[Suspension polymerization]

A particulate polymer (p1) was produced by suspension polymerization. Specifically, the monomer composition (I) obtained as described above was added to the colloidal dispersion liquid (A) containing magnesium hydroxide, was further stirred therewith, and then 2.9 parts of di(3,5,5-trimethylhexanoyl) peroxide (PEROYL® 355 produced by NOF Corporation) was added as a polymerization initiator to yield a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form mixed droplets off the monomer composition (I) in the colloidal dispersion liquid (A) containing magnesium hydroxide.
The magnesium hydroxide-containing colloidal dispersion liquid (A) in which droplets of the monomer composition had been formed was loaded into a reactor, the temperature was raised to 70°C, and a polymerization reaction was performed for 5 hours to yield a water dispersion containing a particulate polymer.

The water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated a number of times. Thereafter, separation was performed by filtration to obtain solid content that was then loaded into a vessel of a dryer and was dried at 40°C for 48 hours to obtain a dried particulate polymer p1.

<Production of particulate polymer p2>

[Production of monomer composition (1)]

A monomer composition (J) was produced by mixing 65 parts of styrene as an aromatic vinyl monomer, 24.5 parts of 2-ethylhexyl acrylate as a (meth)acrylic acid ester monomer, 0.5 parts of ethylene glycol dimethacrylate as a cross-linkable monomer, and 10 parts of acrylonitrile as a (meth)acrylonitrile monomer.

[Emulsion polymerization]

In a 5 MPa pressure-resistant vessel equipped with a stirrer, the monomer composition (J) obtained as described above was mixed, and then the monomer composition, 1 part of sodium dodecylbenzenesulfonate as an emulsifier, 150 parts of deionized water, and 0.5 parts of potassium persulfate as a polymerization initiator were loaded and were thoroughly stirred. Thereafter, the temperature was raised to 60°C so as to initiate polymerization. Polymerization was continued until the polymerization conversion rate reached 96% to yield a water dispersion containing a particulate polymer p2.

(Comparative Example 1)

Various operations, measurements, and evaluations were performed in the same way as in Example 1 with the exception that heat-resistant fine particles were not compounded in "Production of slurry composition". The results are shown in Table 2.

(Comparative Example 2)

Various operations, measurements, and evaluations were performed in the same way as in Example 1 with the exception that a particulate polymer was not compounded in "Production of slurry composition". The results are shown in Table 2.

(Comparative Example 3)

Various operations, measurements, and evaluations were performed in the same way as in Example 1 with the exception that the particulate polymer p1 was not compounded in "Production of particulate polymer P". The results are shown in Table 2.

(Comparative Example 4)

Various operations, measurements, and evaluations were performed in the same way as in Example 1 with the exception that the particulate polymer p2 was not compounded in "Production of particulate polymer P". The results are shown in Table 2.

(Comparative Example 5)

Various operations, measurements, and evaluations were performed in the same way as in Example 1 with the exception that the number of parts of the colloidal dispersion liquid containing magnesium hydroxide was reduced in "Production of particulate polymer p1" such that the volume-average particle diameter and position of a large-diameter peak for the particulate polymer were as indicated in Table 2. The results are shown in Table 2.

(Comparative Example 6)

Various operations, measurements, and evaluations were performed in the same way as in Example 1 with the exception that the number of parts of the colloidal dispersion liquid containing magnesium hydroxide was increased in "Production of particulate polymer p1" such that the volume-average particle diameter and position of a large-diameter peak for the particulate polymer were as indicated in Table 2. The results are shown in Table 2.

(Comparative Example 7)

Various operations, measurements, and evaluations were performed in the same way as in Example 1 with the exception that the number of parts of the emulsifier was reduced in "Production of particulate polymer p2" such that the volume-average particle diameter and position of a small-diameter peak for the particulate polymer were as indicated in Table 2. The results are shown in Table 2.

(Comparative Example 8)

Various operations, measurements, and evaluations were performed in the same way as in Example 1 with the exception that the number of parts of the emulsifier was increased in "Production of particulate polymer p2" such that the volume-average particle diameter and position of a small-diameter peak for the particulate polymer were as indicated in Table 2. The results are shown in Table 2.

(Comparative Example 9)

Various operations, measurements, and evaluations were performed in the same way as in Example 1 with the exception that the chemical compositions of the monomer compositions in "Production of particulate polymer p1" and "Production of particulate polymer p2" were changed such that the chemical composition of the obtained particulate polymer was as indicated in Table 2. The results are shown in Table 2.

In Tables 1 and 2:

"ST" indicates styrene;
"2EHA" indicates 2-ethylhexyl acrylate;
"EDMA" indicates ethylene glycol dimethacrylate;
"BA" indicates n-butyl acrylate;
"AN" indicates acrylonitrile;
"MAA" indicates methacrylic acid;
"AGE" indicates allyl glycidyl ether;
"AMA" indicates allyl methacrylate; and
"GMA" indicates glycidyl methacrylate.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Particulate polymer | Chemical composition | ST/2EHA/EDMA/AN = 65/24.5/0.5/10 | ST/2EHA/EDMA/AN = 65/24.5/0.5/10 | ST/2EHA/EDMA/AN = 65/24.5/0.5/10 | ST/2EHA/EDMA/AN = 65/24.5/0.5/10 | ST/2EHA/EDMA/AN = 65/24.5/0.5/10 | ST/2EHA/EDMA/AN = 75/14.5/0.5/10 | ST/2EHA/EDMA/AN = 35/54.5/0.5/10 | ST/2EHA/EDMA/AN = 65/24.5/0.5/10 | ST/2EHA/EDMA/GMA = 65/24.5/0.5/10 | ST/2EHA/EDMA/AN = 65/24.5/0.5/10 | ST/2EHA/EDMA/AN = 65/24.5/0.5/10 |
| | Structure | Non-unifunn | Non-uniform | Non-unifunn | Non-uniform | Non-uniform | Non-uniform | Non-uniform | Non-uniform | Non-uniform | Non-unifunn | Uniform |
| | Volume-average particle diameter ($\mu$m) | 8 | 3 | 12 | 5 | 9 | 8 | 8 | 7 | 8 | 8 | 8 |
| | Particle diameter P1 of peak in range of not less than 5 $\mu$m and not more than 10 $\mu$m ($\mu$m) | 6 | 5 | 9 | 6 | 6 | 6 | 6 | 6 | 6 | 6 | 6 |
| | Particle diameter P2 of peak or like in range of not less than 1 $\mu$m and not more than 3 $\mu$m ($\mu$m) | 2 | 2 | 2 | 1 | 3 | 2 | 2 | 2 | 2 | 2 | 2 |
| | Glass-transition temperature (°C) | 60 | 60 | 60 | 60 | 60 | 70 | 20 | 60 | 50 | 50 | 60 |
| | Degree of swelling in electrolyte solution ($\times$) | 2 | 2 | 2 | 2 | 2 | 1.5 | 8 | 2 | 2 | 2 | 2 |

EP 4 379 939 A1

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Functional layer | Number proportion having particle diameter of 3 $\mu$m or less (%) | 20 | 20 | 20 | 20 | 20 | 20 | 20 | 50 | 20 | 20 | 20 |
| | Heat-resistant adhesive layer thickness L ($\mu$m) | 3 | 3 | 3 | 3 | 4 | 3 | 3 | 3 | 3 | 3 | 3 |
| | P1/L (-) | 2 | 1.7 | 3.0 | 2.0 | 1.5 | 2 | 2 | 2 | 2 | 2 | 2 |
| | P2/L (-) | 0.67 | 0.67 | 0.67 | 0.33 | 0.75 | 0.67 | 0.67 | 0.67 | 0.67 | 0.67 | 0.67 |
| Heat-resistant fine particles | Particle diameter ($\mu$m) | 0.3 | 0.3 | 0.3 | 0.3 | 0.3 | 0.3 | 0.3 | 0.3 | 0.3 | 0.3 | 0.3 |
| | Type | Alumina | Alumina | Alumina | Alumina | Alumina | Alumina | Alumina | Alumina | Alumina | Alumina | Alumina |
| Binder | Chemical composition | BA/AN/AMA / MANAGE | BA/AN/AMA / MANAGE | BA/AN/AMA / MANAGE | BA/AN/AMA / MANAGE | BA/AN/AMA / MANAGE | BA/AN/AMA / MANAGE | BA/AN/AMA / MANAGE | BA/AN/AMA / MANAGE | BA/AN/AMA / MANAGE | 2HEA/ST/A MA /AA/AGE | BA/AN/AMA / MANAGE |
| | Number of parts added (based on 100 parts of heat-resistant fine particles) | 5 | 5 | 5 | 5 | 5 | 5 | 5 | 5 | 5 | 5 | 5 |
| | Volume-average particle diameter ($\mu$m) | 0.25 | 0.25 | 0.25 | 0.25 | 0.25 | 0.25 | 0.25 | 0.25 | 0.25 | 0.25 | 0.25 |
| Coating site of functional layer | | On separator | On separator | On separator | On separator | On separator | On separator | On separator | On separator | On separator | On separator | On separator |

EP 4 379 939 A1

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Evaliation | Wet adhesiveness | A | B | B | B | A | B | B | B | A | A | B |
| | Dusting resistance | A | A | B | A | A | A | A | A | A | A | A |
| | Capacity maintenance rate after vibration testing | A | B | B | B | A | B | B | B | A | A | B |
| | Cycle characteristics | A | A | A | A | A | A | A | A | A | A | B |
| | Output characteristics | A | A | B | B | B | A | B | A | A | A | A |

EP 4 379 939 A1

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Particulate polymer | Chemical composition | ST/2EHA/ EDMA/AN = 65/24.5/0.5/10 | None | ST/2EHA/ EDMA/AN = 65/24.5/0.5/10 | ST/2EHA/ EDMA/AN = 65/24.5/0.5/10 | ST/2EHA/ EDMA/AN = 65/24.5/0.5/10 | ST/2EHA/ EDMA/AN = 65/24.5/0.5/10 | ST/2EHA/ EDMA/AN = 65/24.5/0.5/10 | ST/2EHA/ EDMA/AN = 65/24.5/0.5/10 | ST/2EHA/ EDMA/AN = 70/24.5/0.5/15 |
| | Structure | Non-uniform | | Non-uniform | Non-uniform | Non-uniform | Non-uniform | Non-uniform | Non-uniform | Non-uniform |
| | Volume-average particle diameter ($\mu$m) | 8 | | 2 | 8 | 10 | 3 | 10 | 6 | 8 |
| | Particle diameter P1 of peak in range of not less than 5 $\mu$m and not more than 10 $\mu$m ($\mu$m) | 6 | | None | 8 | 15 | 4 | 6 | 6 | 6 |
| | Particle diameter P2 of peak or like in range of not less than 1 $\mu$m and not more than 3 $\mu$m ($\mu$m) | 2 | | 2 | None | 2 | 2 | 7 | 0.5 | 2 |
| | Glass-transition temperature (°C) | 60 | | 60 | 60 | 60 | 60 | 60 | 60 | 65 |
| | Degree of swelling in electrolyte solution ($\times$) | 2 | | 2 | 2 | 2 | 2 | 2 | 2 | 10 |

29

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Functional layer | Number proportion having particle diameter of 3 $\mu$m or less (%) | 20 | | 20 | 0 | 20 | 20 | 20 | 20 | 20 |
| | Heat-resistant adhesive layer thickness L ($\mu$m) | 3 | 3 | 3 | 3 | 3 | 3 | 3 | 3 | 3 |
| | P1/L (-) | 2 | No particulate polymer | None | 2.7 | 5 | 1.3 | 2 | 2.0 | 2 |
| | P2/L (-) | 0.67 | | 0.67 | None | 0.67 | 0.67 | 2.33 | 0.17 | 0.67 |
| Heat-resistant fine particles | Particle diameter ($\mu$m) | No heat-resistant fine particles | 0.3 | 0.3 | 0.3 | 0.3 | 0.3 | 0.3 | 0.3 | 0.3 |
| | Type | | Alumina | Alumina | Alumina | Alumina | Alumina | Alumina | Alumina | Alumina |
| Binder | Chemical composition | BA/AN/AMA/ MANAGE | BA/AN/AMA/ MANAGE | BA/AN/AMA/ MANAGE | BA/AN/AMA/ MANAGE | BA/AN/AMA/ MANAGE | BA/AN/AMA/ MANAGE | BA/AN/AMA/ MANAGE | BA/AN/AMA/ MANAGE | BA/AN/AMA/ MANAGE |
| | Number of parts added (based on 100 parts of heat-resistant fine particles) | 5 | 5 | 5 | 5 | 5 | 5 | 5 | 5 | 5 |
| | Volume-average particle diameter ($\mu$m) | 0.25 | 0.25 | 0.25 | 0.25 | 0.25 | 0.25 | 0.25 | 0.25 | 0.25 |
| Coating site of functional layer | | On separator | On separator | On separator | On separator | On separator | On separator | On separator | On separator | On separator |

EP 4 379 939 A1

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Evaluation | Wet adhesiveness | C | C | C | C | C | C | B | C | C |
| | Dusting resistance | C | A | A | C | C | A | C | B | A |
| | Capacity maintenance rate after vibration testing | C | C | C | C | C | C | C | C | C |
| | Cycle characteristics | C | C | C | C | C | C | C | C | C |
| | Output characteristics | A | A | B | A | A | B | A | C | C |

It can be seen from Tables 1 and 2 that a balance of high levels of dusting resistance and adhesiveness after immersion in electrolyte solution could be achieved by using the compositions of Examples 1 to 11, which each contained a binder, heat-resistant fine particles, and a particulate polymer having a volume-average particle diameter, a degree of swelling in electrolyte solution, and a glass-transition temperature that were all within specific ranges and having a particle diameter distribution by number in which a peak or the like was present in each of two specific regions. Moreover, it can be seen that a balance of high levels of dusting resistance and adhesiveness after immersion in electrolyte solution could not be achieved in Comparative Example 1 in which heat-resistant fine particles were absent, Comparative Example 2 in which a specific particulate polymer was absent, Comparative Examples 3, 5, and 6 in which the contained particulate polymer did not satisfy a condition relating to a large-diameter peak, Comparative Examples 4, 7, and 8 in which the contained particulate polymer did not satisfy a condition relating to a small-diameter peak or the like, and Comparative Example 9 in which the contained particulate polymer did not satisfy a condition relating to degree of swelling in electrolyte solution.

INDUSTRIAL APPLICABILITY

According to the present disclosure, it is possible to provide a composition for a functional layer that is capable of forming a functional layer that enables a balance of high levels of dusting resistance and adhesiveness after immersion in electrolyte solution and a method of producing this composition for a functional layer.

Moreover, according to the present disclosure, it is possible to provide a functional layer that enables a balance of high levels of dusting resistance and adhesiveness after immersion in electrolyte solution.

Furthermore, according to the present disclosure, it is possible to provide an electrochemical device including the presently disclosed functional layer.

**Claims**

1. A composition for an electrochemical device functional layer comprising a particulate polymer, a binder, and heat-resistant fine particles, wherein

   the particulate polymer has a volume-average particle diameter of more than 1.0 $\mu$m and not more than 15.0 $\mu$m, the particulate polymer has a degree of swelling in electrolyte solution of not less than a factor of 1 and not more than a factor of 8,
   a particle diameter distribution by number of the particulate polymer has at least one peak in a particle diameter range of not less than 5.0 $\mu$m and not more than 10.0 $\mu$m and has at least one peak or shoulder in a particle diameter range of not less than 1.0 $\mu$m and not more than 3.0 $\mu$m, and
   the particulate polymer has a glass-transition temperature of not lower than 20°C and not higher than 100°C.

2. The composition for an electrochemical device functional layer according to claim 1, wherein a proportion constituted by a number of particles having a particle diameter of 3 $\mu$m or less is not less than 20% and not more than 50% of a total number of particles in the particle diameter distribution of the particulate polymer.

3. The composition for an electrochemical device functional layer according to claim 1, wherein the particulate polymer includes an aromatic vinyl monomer unit.

4. The composition for an electrochemical device functional layer according to claim 1, wherein the particulate polymer includes at least one among a nitrile group-containing monomer unit, an N-methylolamide group-containing monomer unit, and an epoxy group-containing unsaturated monomer unit.

5. The composition for an electrochemical device functional layer according to claim 1, wherein the particulate polymer includes a cross-linkable monomer unit.

6. The composition for an electrochemical device functional layer according to claim 1, wherein the binder includes a (meth)acrylic acid ester monomer unit.

7. The composition for an electrochemical device functional layer according to claim 1, wherein the binder has a volume-average particle diameter of 0.8 $\mu$m or less.

8. A functional layer for an electrochemical device formed using the composition for an electrochemical device functional layer according to any one of claims 1 to 7, wherein

the functional layer for an electrochemical device has a structure in which the particulate polymer is partially embedded in a heat-resistant adhesive layer containing the heat-resistant fine particles and the binder, the heat-resistant adhesive layer has a thickness L of not less than 2 $\mu$m and not more than 4 $\mu$m, and relationships (1) and (2), shown below,

$$1.0 \leq P1/L \leq 3.0 \cdots (1)$$

$$0.25 \leq P2/L \leq 0.8 \cdots (2)$$

are satisfied when, in the particle diameter distribution by number of the particulate polymer, a particle diameter corresponding to a largest peak among the at least one peak in the particle diameter range of not less than 5.0 $\mu$m and not more than 10 $\mu$m is taken to be P1 and a particle diameter corresponding to a largest peak or shoulder among the at least one peak or shoulder in the particle diameter range of not less than 1 $\mu$m and not more than 3 $\mu$m is taken to be P2.

9. A method of producing the composition for an electrochemical device functional layer according to any one of claims 1 to 7, comprising synthesizing the particulate polymer through:

first polymerization of polymerizing a monomer composition containing at least one among an aromatic vinyl monomer and a (meth)acrylonitrile monomer; and
second polymerization of adding into a polymerization system and polymerizing one or more monomers selected from an aromatic vinyl monomer, a nitrile group-containing monomer, an N-methylolamide group-containing monomer, and an epoxy group-containing unsaturated monomer at a timing at which a polymerization conversion rate in the first polymerization is not less than 70% and not more than 95%.

10. An electrochemical device comprising the functional layer for an electrochemical device according to claim 8.

## INTERNATIONAL SEARCH REPORT

| International application No. |
|---|
| **PCT/JP2022/028403** |

**A.    CLASSIFICATION OF SUBJECT MATTER**

*H01M 50/443*(2021.01)i; *H01G 11/52*(2013.01)i; *H01M 4/02*(2006.01)i; *H01M 4/13*(2010.01)i; *H01M 50/403*(2021.01)i; *H01M 50/414*(2021.01)i; *H01M 50/42*(2021.01)i; *H01M 50/434*(2021.01)i; *H01M 50/446*(2021.01)i; *H01M 50/451*(2021.01)i; *H01M 50/489*(2021.01)i

FI:    H01M50/443 E; H01M50/414; H01M50/42; H01M4/02 Z; H01M4/13; H01M50/446; H01M50/451; H01G11/52; H01M50/489; H01M50/443 C; H01M50/443 M; H01M50/434; H01M50/403 D

According to International Patent Classification (IPC) or to both national classification and IPC

**B.    FIELDS SEARCHED**

Minimum documentation searched (classification system followed by classification symbols)

H01M50/443; H01G11/52; H01M4/02; H01M4/13; H01M50/403; H01M50/414; H01M50/42; H01M50/434; H01M50/446; H01M50/451; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2014-203680 A (NIPPON ZEON CO., LTD.) 27 October 2014 (2014-10-27) | 1-10 |
| A | WO 2012/043812 A1 (NIPPON ZEON CO., LTD.) 05 April 2012 (2012-04-05) | 1-10 |
| A | WO 2011/040562 A1 (NIPPON ZEON CO., LTD.) 07 April 2011 (2011-04-07) | 1-10 |
| A | JP 2018-147578 A (ASAHI KASEI KABUSHIKI KAISHA) 20 September 2018 (2018-09-20) | 1-10 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/028403**

| Patent document cited in search report | | | Publication date (day/month/year) | Patent family member(s) | | | Publication date (day/month/year) |
|---|---|---|---|---|---|---|---|
| JP | 2014-203680 | A | 27 October 2014 | (Family: none) | | | |
| WO | 2012/043812 | A1 | 05 April 2012 | CN | 103238234 | A | |
| | | | | KR | 10-2013-0114153 | A | |
| WO | 2011/040562 | A1 | 07 April 2011 | US | 2012/0189897 | A1 | |
| | | | | EP | 2485295 | A1 | |
| | | | | CN | 102630353 | A | |
| | | | | KR | 10-2012-0091028 | A | |
| JP | 2018-147578 | A | 20 September 2018 | (Family: none) | | | |

Form PCT/ISA/210 (patent family annex) (January 2015)

**REFERENCES CITED IN THE DESCRIPTION**

**Patent documents cited in the description**

- JP 2017098203 A
- WO 2018096975 A1
- JP 2016100333 A
- JP 2016100334 A
- JP 2019133934 A
- JP 2012204303 A